# EUROPÄISCHE PATENTSCHRIFT

(11) **EP 0 638 451 B1**
(45) Veröffentlichungstag und Bekanntmachung des Hinweises auf die Patenterteilung: **08.01.1997**
(21) Anmeldenummer: 94111945.5
(22) Anmeldetag: 30.07.1994
(51) Int. Cl.: B60J 5/04

(54) **Kraftfahrzeugtür**
Vehicle door
Porte de véhicule

(30) Priorität: 09.08.1993 DE 4326684
(43) Veröffentlichungstag der Anmeldung: 15.02.1995
(73) Patentinhaber: ADAM OPEL AG, 65423 Rüsselsheim (DE)
(72) Erfinder: Kreth, Laszlo, D-64319 Pfungstadt (DE); Helmsing, Gerhard, Dipl.-Ing., D-65817 Eppstein (DE); Demant, Hans, Dipl.-Ing., D-65201 Wiesbaden (DE)
(74) Vertreter: Kümpfel, Heinz, Dipl.-Ing.

(56) Entgegenhaltungen:
- EP-A- 0 274 985
- EP-A- 0 286 923
- EP-A- 0 406 034
- EP-A- 0 527 700
- DE-A- 4 020 745
- US-A- 4 471 251
- AUTOMOTIVE ENGINEERING, Bd.100, Nr.8, August 1992, WARRENDALE,PA,US Seite 57 'MAGNESIUM/ALUMINIUM DOOR'

## Beschreibung

Die Erfindung bezieht sich auf eine Kraftfahrzeugtür in einer Ausbildung gemäß dem Oberbegriff des Patentanspruches 1.

Eine Kraftfahrzeugtür dieser Art ist aus der EP 0 274 985 A1 bekannt. Den äußeren Abschluß dieser Tür bildet eine Außen- und eine Innenwand. Zwischen der Außen- und der Innenwand ist ein Aggregateträger als Türrahmen angeordnet, wobei an diesem eine Fensterhebebetätigung, Türscharniere, ein Türschloß und ggf. ein Fensterrahmen gehaltert sind. Der Türrahmen (Aggregateträger) ist aus Strangpreßprofilen, insbesondere aus Aluminiumlegierungs-Strangpreßprofilen gefertigt, um zu erreichen, daß die Tür möglichst leicht aber sehr steif ist. Der zu betreibende Aufwand zur Schaffung des Aggregateträgers und zur Montage der Tür ist jedoch relativ hoch. Es sind viele Verbindungsstellen zwischen einzelnen Profilen vorhanden.

Es ist Aufgabe der Erfindung, eine Kraftfahrzeugtür der o. g. Art zu schaffen, die gegenüber den beschriebenen und aus der Praxis bekannten Türen im Fertigungsaufwand sowie im Gewicht und in der Steifigkeit optimiert ist und damit unaufwendig und kostengünstig produzierbar ist, zu einer Einsparung an Kraftstoff führt und einen hohen Schutz gegen Aufprallkräfte bietet.

Zur Lösung dieser Aufgabe zeichnet sich die Kraftfahrzeugtür nach der Erfindung durch die im kennzeichnenden Teil des Patentanspruchs 1 angegebenen Merkmale aus. Weitere vorteilhafte Ausgestaltungen ergeben sich aus den Patentansprüchen 2 bis 7.

Die erfindungsgemäße Kraftfahrzeugtür wird komplett aus stranggepreßten Profilen aus Leichtmetall geschaffen, wobei zumindest drei solcher Profile miteinander verbunden sind. Die Profile sind derart geformt, daß sie die Außenwand und die Innenwand bilden und zwischen sich einen Hohlraum zur Anordnung der Aggregate begrenzen. Nach außen hin sind die Profile im wesentlichen glatt, im Türinnenraum sind sie jedoch mit Profilkästen bzw. Profilverzweigungen versehen. So wird eine sehr hohe Steifigkeit erreicht und eine optimale Möglichkeit ist gegeben, die Aggregate zu befestigen. Türscharniere und das Türschloß können unaufwendig in von den Profilkästen gebildeten Längsnuten oder innerhalb der profilverzweigungen gehaltert werden. Auch Bauteile der Fensterhebebetätigung, einer Türbremse oder eines Seitenairbags können mit geringem Montageaufwand im Türhohlraum an den Profilen befestigt werden.

Die Außenwand und die Innenwand der Kraftfahrzeugtür wird jeweils von oberen und unteren stranggepreßten Elementen gebildet, wobei die unteren Elemente der Außen- und der Innenwand aus nur einem Leichmetallprofil gefertigt sein können. Es sind also drei oder vier Profilelemente zur Schaffung der Tür erforderlich. Diese werden auf einfache Weise nach der Montage der Aggregate miteinander verbunden, was durch bekannte Verfahren (Verkleben, Verhaken, Vernieten, Verschweißen, Verschrauben, Verklemmen) erfolgt.

An einer von den Profilen (speziell den unteren Profilen) gebildeten Türunterkante ist eine weitere Profilverzweigung vorgesehen. Eine Profilfahne weist in Richtung des Fahrzeuginnern und bildet mit der Türunterkante eine Tasche. In diese Tasche greift bei geschlossener Tür eine Profilfahne eines Schwellers des Kraftfahrzeugs ein. So wird eine zusätzliche Stabilität der Tür bei Einwirkung von Aufprallkräften erreicht und verhindert, daß die Tür ins Fahrzeuginnere eindringen kann.

Die weitere, detaillierte Beschreibung der Erfindung erfolgt anhand eines Ausführungsbeispiels. In den dazugehörigen Zeichnungen zeigt:

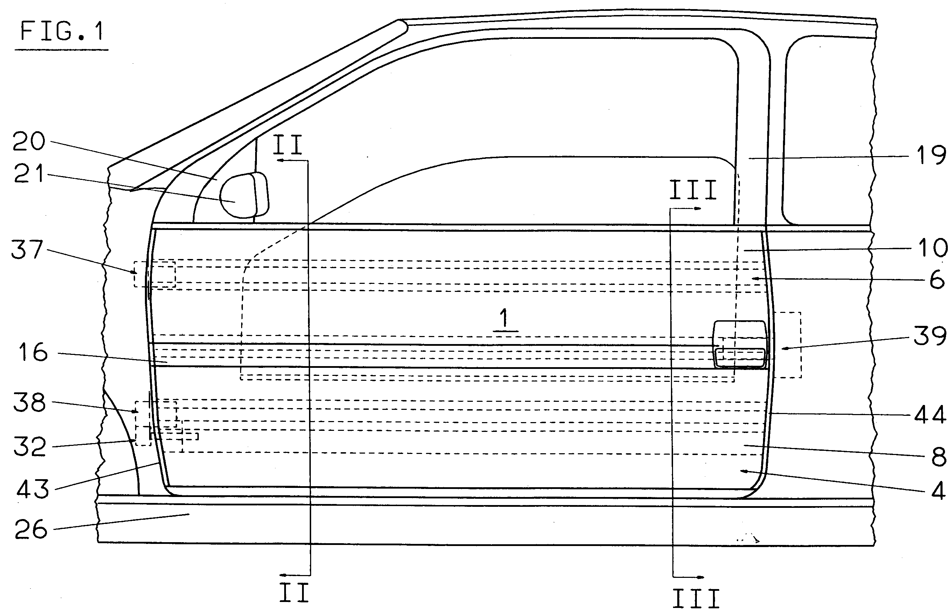

- Fig. 1: eine Seitenansicht auf eine Kraftfahrzeugtür nach der Erfindung;
- Fig. 2: einen Schnitt II-II aus Figur 1 in vergrößertem Maßstab;
- Fig. 3: einen Schnitt III-III aus Figur 1 in vergrößertem Maßstab.

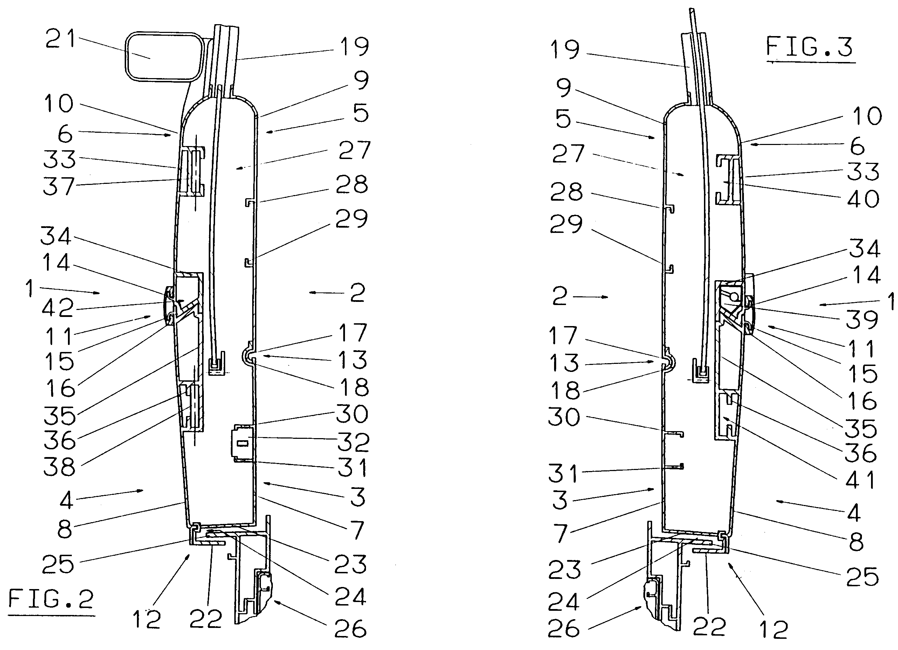

Die wesentlichen Details der Kraftfahrzeugtür nach der Erfindung sind aus den Figuren 2 und 3 ersichtlich. Eine Außenwand 1 und eine Innenwand 2 besteht jeweils aus einem unteren Element 3, 4 und einem oberen Element 5, 6. Als Halbzeuge für diese Elemente 3 bis 6 finden stranggepreßte Profile 7 bis 10 aus einer Aluminiumlegierung Verwendung, wobei aber auch andere Leichtmetalle in Betracht kommen.

Die Kraftfahrzeugtür hat neben der Aufgabe des Verschlusses einer Karosserieöffnung eine Reihe weiterer Funktionen zu erfüllen bzw. bestimmten Anforderungen zu entsprechen. Durch die Art und Weise der Gestaltung der Profile 7 bis 10 kann man all diesen Anforderungen gerecht werden. Die Profile 7 bis 10 sind zum Türäußeren hin im wesentlichen glatt gestaltet und entsprechen somit den Designanforderungen. Eine Oberflächenbehandlung und die Lackierung sind unaufwendig durchführbar. Im Bereich von Verbindungsstellen 11, 12, 13 zwischen den einzelnen Profilen 7 bis 10 sind diese so gestaltet, daß sie relativ zueinander exakt positionierbar sind und sich ineinander verhaken. Die Profile 8 und 10 weisen an der Verbindungsstelle 11 kleine Profilfahnen 14, 15 auf, über die nach erfolgter Türmontage eine Zierleiste 16 geschoben werden kann. Diese kann auch zusätzlich zur Versteifung der Kraftfahrzeugtür beitragen. Die Verbindungsstelle 13 ist so gestaltet, daß die Profile 7 und 9 nur noch in Strangpreßrichtung relativ zueinander beweglich sind. Dazu ist am Profil 9 eine Nase 17 und am Profil 7 eine der Form der Nase 17 angepaßte Aufnahme 18 vorgesehen. Durch Einschwenken der Nase 17 in die Aufnahme 18 ist die Verbindung herstellbar, wobei hier wie auch an den anderen Verbindungsstellen 11, 12 eine Fixierung durch Kleben erfolgte. Prinzipiell ist es auch möglich an diesen Verbindungsstellen 11 bis 13 zu schweißen, zu schrauben oder eine Klemmverbindung herzustellen.

Im oberen Türbereich ist an den Profilen 9, 10 ein Fensterrahmen 19 und ein Spiegeldreieck 20 mit Außenspiegel 21 zu haltern.

Die beiden unteren Elemente 3, 4 der Kraftfahrzeugtür, die im Ausführungsbeispiel von den Profilen 7, 8 gebildet werden, können auch aus nur einem Profil gefertigt sein. Aus Gründen der Montagefreundlichkeit sind hier aber zwei vormontierbare Profile 7, 8 vorgesehen. Das Profil 7 ist im Bereich der Verbindungsstelle 12 mit einer Profilfahne 22 versehen, die gemeinsam mit einer Türunterkante 23 eine Profiltasche 24 bildet. Bei geschlossener Tür greift in diese Profiltasche 24 eine Profilfahne 25 eines ebenfalls stranggepreßten Schwellers 26 ein. Durch diese Profilausbildung wird die Tür versteift und beim Einwirken großer seitlicher Kräfte wird wirkungsvoll verhindert, daß sich die Tür ins Fahrzeuginnere bewegt. Türdichtungen, die ebenfalls in diesem Bereich anzuordnen sind, wurden nicht zeichnerisch dargestellt.

Von den Profilen 7 bis 10 wird ein Türhohlraum 27 begrenzt. Hier sind weitere erfindungswesentliche Details vorgesehen. Am Profil 9 sind innen zwei Profilfahnen 28, 29 angeformt, die zur Halterung einer nicht gezeigten Fensterhebebetätigung vorgesehen sind. Ein Blech, an dem die Fensterhebebetätigung gelagert ist, kann auf einfache Weise zwischen die Profilfahnen 28, 29 geschoben und dort beispielsweise durch eine Schraube fixiert werden.

Zwei weitere Profilfahnen 30, 31 sind Teil des unteren Profils 7 der Innenwand 2. An ihnen ist eine Türbremse 32 gehaltert, die so sicher verankert ist, daß sie die möglicherweise sehr großen Bremskräfte aufnehmen kann.

Die Profile 8, 10 der Außenwand 1 sind an ihrer Innenseite mit einer Reihe von Profilkästen 33, 34, 35, 36 und Profilverzweigungen versehen. Diese erfüllen mehrere Funktionen. Sie führen erstens zu einer wesentlichen Versteifung der Tür als ganzes, wodurch die Notwendigkeit der Anordnung eines separaten Seitenaufprallschutzes entfällt. Er ist Bestandteil der Außenwand 1. Zweitens sind die Profilkästen 33, 34 und 36 bzw. die Profilverzweigungen derart geformt, daß Türaggregate wie Türscharniere 37, 38 und ein Türschloß 39 in von den Profilkästen 33, 34, 36 gebildeten Nuten 40, 41, 42 integrierbar sind. Dies vereinfacht die Türmontage stark, sorgt für eine genaue Positionierung der Aggregate und gibt den Aggregaten sicheren Halt. Alle Aggregate können vor dem Zusammensetzen der Profile 7 bis 10 an diesen montiert werden, und die Kraftfahrzeugtür wird dann aus Modulen zusammengesetzt, bevor die Profile 7 bis 10 an beiden Enden der Tür durch Verschlußplatten 43, 44 verschlossen werden. Dies können beispielsweise Tiefziehteile sein.

## Patentansprüche

1. Kraftfahrzeugtür, umfassend eine Außenwand (1), eine Innenwand (2) sowie zwischen der Außenwand (1) und der Innenwand (2) angeordnete weitere Aggregate, wie Fensterhebebetätigung, Türscharniere (37, 38) und Türschloß (39) sowie ggf. mit einem Fensterrahmen (19) und einem Außenspiegel (21), **dadurch gekennzeichnet**, daß die Außenwand (1) und die Innenwand (2) von in an sich bekannter Weise miteinander zu verbindenden, stranggepreßten Profilen (7 - 10) aus Leichtmetall gebildet werden und die Aggregate direkt an der Außenwand (1) oder der Innenwand (2), in deren Profil (7 - 10) integriert gehaltert sind.

2. Kraftfahrzeugtür nach Anspruch 1, **dadurch gekennzeichnet**, daß drei oder vier stranggepreßte Profile (7 - 10) zur Bildung von unteren Elementen (3, 4) und oberen Elementen (5, 6) der Innenwand (2) und der Außenwand (1) geformt und miteinander verklebt, verhakt, vernietet, verschweißt, verschraubt oder verklemmt sind.

3. Kraftfahrzeugtür nach Anspruch 1 oder 2, **dadurch gekennzeichnet**, daß die Strangpreßprofile (7 - 10) zum Türäußeren hin im wesentlichen mit glatter Oberfläche ausgebildet sind und zum Türinneren hin Längsnuten (40, 41, 42) bildende Profilkästen (33 - 36) und Profilverzweigungen aufweisen.

4. Kraftfahrzeugtür nach Anspruch 3, **dadurch gekennzeichnet**, daß die Profilkästen (33 - 36) und die Profilverzweigungen verformungsstabil ausgeführt und die Aggregate in bzw. an den Profilkästen (33 - 36) und Profilverzweigungen gehaltert sind.

5. Kraftfahrzeugtür nach Anspruch 3 oder 4, **dadurch gekennzeichnet**, daß Teile der Türscharniere (37, 38), des Türschlosses (39), der Fensterhebebetätigung sowie einer Türbremse (32) in den Längsnuten (40, 41, 42) der Strangpreßprofile (7 - 10) gehaltert sind.

6. Kraftfahrzeugtür nach einem der Ansprüche 1 bis 5, **dadurch gekennzeichnet**, daß im Bereich einer Verbindung (11) zwischen dem unteren Element (4) und dem oberen Element (6) der Außenwand (1) eine Zierleiste (16) bzw. eine Stabilisierungsleiste auf nach außen weisenden Profilfahnen (14, 15) der beiden stranggepreßten Profile (8, 10) aufgeschoben ist.

7. Kraftfahrzeugtür nach einem der Ansprüche 1 bis 6, **dadurch gekennzeichnet**, daß im Bereich einer Türunterkante (23) eine Profilverzweigung [Profilfahne (22)] in Richtung des Fahrzeuginnern weist und mit der Türunterkante (23) eine Tasche (24) bildet, in die bei geschlossener Kraftfahrzeugtür eine nach außen weisende Profilverzweigung [Profilfahne (25)] eines Türschwellers (26) eingreift.

## Claims

1. Motor vehicle door, including an exterior panel (1), an interior panel (2) as well as further units arranged between the exterior panel (1) and the interior panel (2) such as window winder operating means, door hinges (37, 38) and door lock (39) as well as, if occasion arises, with a window frame (19) and an outside mirror (21), characterised in that the exterior panel (1) and the interior panel (2) are formed from extruded light metal profiles (7-10) to be joined together in a manner known in the art, and the units are mounted directly on the exterior panel (1) or on the interior panel (2), integrated in its profile (7-10).

2. Motor vehicle door according to claim 1, characterised in that three or four extruded profiles (7-10) for forming lower elements (3, 4) and upper elements (5, 6) of the interior panel (2) and exterior panel (1) are shaped and adhered, hooked, riveted, welded, bolted or locked together.

3. Motor vehicle door according to claim 1 or 2, characterised in that the extruded profiles (7-10) are designed essentially with a smooth surface towards the exterior of the door and comprise profile boxes (33-36) and profile branches forming longitudinal grooves (40, 41, 42) towards the interior of the door.

4. Motor vehicle door according to claim 3, characterised in that the profile boxes (33-36) and the profile branches are resistant to deformation and the units are mounted in or on the profile boxes (33-36) and profile branches.

5. Motor vehicle door according to claim 3 or 4, characterised in that parts of the door hinges (37, 38), the door lock (39), the window winder operating means as well as a door brake (32) are mounted in the longitudinal grooves (40, 41, 42) of the extruded profiles (7-10).

6. Motor vehicle door according to any of claims 1 to 5, characterised in that in the region of a joint (11) between the lower element (4) and the upper element (6) of the exterior panel (1), a trim strip (16) or a stabilising strip is fitted on outwardly pointing profile lugs (14, 15) of the two extruded profiles (8, 10).

7. Motor vehicle door according to any of claims 1 to 6, characterised in that in the region of a door lower edge (23), a profile branch [profile lug (22)] points in the direction of the interior of the vehicle and forms with the door lower edge (23) a recess (24) in which an outwardly pointing profile branch [profile lug (25)] of a door sill (26) engages when the vehicle door is closed.

## Revendications

1. Porte de véhicule, comportant une paroi (1) extérieure, une paroi (2) intérieure, ainsi que, disposés entre les parois extérieure (1) et intérieure (2), d'autres accessoires tels qu'un mécanisme à levier d'actionnement de la vitre, des charnières (37, 38) de porte et une serrure (39) de porte et le cas échéant un cadre (19) de vitre et un rétroviseur (21) extérieur, caractérisée par le fait que la paroi (1) extérieure et la paroi (2) intérieure sont formées de profilés (7-10) extrudés en alliage léger, reliés les uns aux autres d'une manière connue en soi, et que les accessoires sont fixés directement sur la paroi (1) extérieure ou la paroi (2) intérieure, par intégration dans les profilés de ladite paroi.

2. Porte de véhicule selon la revendication 1, caractérisée par le fait que pour former des éléments inférieurs (3, 4) et des éléments supérieurs (5, 6) de la paroi (2) intérieure et de la parois (1) extérieure, on utilise trois ou quatre profilés (7 - 10) extrudés mis en forme qui sont assemblés par collage, par accrochage, par rivetage, pour soudage, par vissage ou par serrage.

3. Porte de véhicule selon la revendication 1 ou 2, caractérisée par le fait que les profilés (7-10) extrudés, côté extérieur de la porte, ont une surface essentiellement lisse et, côté intérieur de la porte, comportent des compartiments (33-36) de profilé et des cloisons de profilé qui définissent des rainures (40, 41, 42) longitudinales.

4. Porte de véhicule selon la revendication 3, caractérisée par le fait que les compartiments (33-36) de profilé et les cloisons de profilé sont résistants à la déformation et que les accessoires sont fixés dans ou sur les compartiments (33-36) de profilé et les cloisons de profilé.

5. Porte de véhicule selon la revendication 3 ou 4, caractérisée par le fait que des parties des charnières (37, 38) de porte, de la serrure (39) de porte, du mécanisme à levier d'actionnement de la vitre ainsi que d'un frein (32) de porte sont fixées dans les rainures (40, 41, 42) longitudinales des profilés (7-10) extrudés.

6. Porte de véhicule selon l'une des revendications 1 à 5, caractérisée par le fait que, dans la région d'une liaison (11) entre l'élément (4) inférieur et l'élément (6) supérieur de la paroi (1) extérieure, une baguette décorative (16) ou une baguette de rigidification est enfilée sur des ailes (14, 15) tournées vers l'extérieur des deux profilés (8, 10) extrudés.

7. Porte de véhicule selon l'une des revendications 1 à 6, caractérisée par le fait que, dans la région d'un bord inférieur (23) de porte, une cloison du profilé [aile de profilé (22)] est dirigée vers l'intérieur et forme avec le bord inférieur (23) de porte une cavité (24), dans laquelle pénètre unecloison du profilé [aile de profilé (25)], dirigée vers l'extérieur, de la traverse (26) inférieure de porte, lorsque la porte du véhicule est fermée.
